(19) Europäisches Patentamt / European Patent Office / Office européen des brevets

(11) **EP 4 592 781 A1**

(12) **DEMANDE DE BREVET EUROPEEN**

(43) Date de publication:
**30.07.2025 Bulletin 2025/31**

(21) Numéro de dépôt: **24153436.1**

(22) Date de dépôt: **23.01.2024**

(51) Classification Internationale des Brevets (IPC):
**G05B 23/02** *(2006.01)* **G05B 17/02** *(2006.01)*
**G05B 13/04** *(2006.01)*

(52) Classification Coopérative des Brevets (CPC):
**G05B 23/024;** G05B 23/0213; G05B 23/0254;
G06N 20/00

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(71) Demandeur: **Datapred SA**
**1015 Lausanne (CH)**

(72) Inventeurs:
• **MAHLER, Nicolas**
  **94300 Vincennes (FR)**
• **ORIOL, Thomas**
  **1004 Lausanne (CH)**

(74) Mandataire: **Weihs, Bruno Konrad**
**André Roland SA**
**IP Attorneys & Services**
**Avenue Collonges 21**
**1004 Lausanne (CH)**

(54) **DÉTECTION DE CHANGEMENT DE RÉGIME D'ACTIFS OU DE PROCESSUS INDUSTRIELS CONNECTÉS**

(57) Un procédé de détection d'un changement de régime d'un actif ou d'un processus industriel connecté et représenté dans des mesures de données d'exploitation provenant de l'actif ou du processus industriel. Le procédé comprend une mise à disposition d'une base de données contenant des données générées à partir des mesures de données d'exploitation provenant de l'actif ou du processus industriel ; un renseignement d'équations différentielles décrivant différents régimes de l'actif ou du processus industriel ; une application de modèles d'apprentissage machine aux données de la base de données générées par l'actif ou le processus industriel, pour calibrer les équations différentielles ; une fondation d'au moins un modèle prédictif sur les équations différentielles, pour obtenir un modèle prédictif ou un groupe de modèles prédictifs par régime de l'actif ou du processus industriel ; une agrégation du modèle prédictif ou du groupe de modèles prédictifs pour prédire une prédiction des données générées par l'actif ou le processus industriel ; une mise en oeuvre d'un métamodèle spécialisé pour attribuer en continu à des pas de temps déterminés, un poids à chaque modèle prédictif de façon à maximiser un pouvoir prédictif de l'ensemble, et vérifier séquentiellement le pouvoir prédictif, en mesurant à chaque pas de temps, pour les données générées par l'actif ou le processus industriel, un écart entre données prédites par l'agrégation de modèles et données constatées dans l'étape d'agrégation ; une mesure du poids de chaque modèle prédictif dans l'agrégation, afin de déterminer un modèle prédictif dominant ayant le plus grand poids parmi tous les poids mesurés au sein de l'agrégation; une constatation d'un processus de changement de régime de l'actif ou du processus lorsqu'un autre modèle prédictif devient dominant au sein de l'agrégation; une actualisation séquentielle de tous les calculs nécessaires dans les étapes qui précèdent ; et une prise en compte de la constatation d'un processus de changement issu de la constatation d'un processus de changement.

FIG. 1

**Description**

**Domaine Technique**

L'invention concerne une méthode pour détecter des changements de régime d'actifs ou de processus industriels connectés.

**Art antérieur**

*Actifs industriels*

Un "actif industriel" désigne généralement tout élément d'équipement, d'infrastructure, de propriété ou de ressource utilisé dans un processus de production ou d'opération dans un environnement industriel. Cet actif peut être corporel ou incorporel et est essentiel pour créer de la valeur au sein d'une entreprise industrielle.

Une machine-outil, un four, une turbine... sont par exemple des actifs corporels.

Dans le contexte des processus industriels connectés, l'actif corporel peut être équipé de capteurs et d'autres dispositifs IoT (Internet of Things, c'est-à-dire "internet des objets") pour collecter des données en temps réel, et optimiser la gestion de l'actif : on parle alors de "Asset Performance Management" (APM) ou gestion de la performance des actifs, et qui inclut :

- La **maintenance prédictive** et préventive pour éviter les défaillances.
- La **gestion des risques** pour anticiper et atténuer les impacts potentiels négatifs sur la production et la sécurité.
- Le **suivi des actifs** en temps réel pour une visibilité complète de leur état et performance.
- **L'amélioration continue** des opérations liées aux actifs en appliquant les leçons apprises et les meilleures pratiques.

*Régimes d'actifs*

Un "régime d'actif" dans la présente description désigne l'ensemble des phénomènes physiques (chaleur, vibrations...) caractérisant le fonctionnement de l'actif corporel considéré à l'instant t.

Ces phénomènes physiques sont généralement décrits par des équations différentielles. Par exemple :

- Le transfert de chaleur

$$q = -k \times \nabla T$$

où q est la densité de flux thermique, T la température, et k la conductivité thermique du matériau considéré (loi de Fourier).

- Le mouvement d'un système masse-ressort

$$x''(t) + \frac{k}{m} x(t) = 0$$

où m est la masse, k la raideur du ressort, et x(t) la position de la masse au cours du temps.

Surveiller les régimes d'actifs est essentiel dans les industries où les équipements représentent un investissement conséquent et où leur bon fonctionnement est critique pour la continuité des opérations, comme dans la fabrication, la production d'énergie, le transport et la logistique par exemple.

*Problème que l'invention se propose de résoudre*

L'invention permet de savoir avec précision dans quel régime l'actif corporel ou le processus industriel se trouve à un instant t. En outre l'invention permet de détecter au plus vite, voire d'anticiper, le passage d'un régime à un autre (« changement de régime »), et de détecter une anomalie dans le fonctionnement de l'actif (c'est-à-dire un régime inconnu).

## Résumé de l'invention

Selon un premier aspect, l'invention propose un procédé de détection d'un changement de régime d'un actif ou d'un processus industriel connecté et représenté dans des mesures de données d'exploitation provenant de l'actif ou du processus industriel. Le procédé comprend une mise à disposition d'une base de données contenant des données générées à partir des mesures de données d'exploitation provenant de l'actif ou du processus industriel ; un renseignement d'équations différentielles décrivant différents régimes de l'actif ou du processus industriel ; une application de modèles d'apprentissage machine aux données de la base de données générées par l'actif ou le processus industriel, pour calibrer les équations différentielles ; une fondation d'au moins un modèle prédictif sur les équations différentielles, pour obtenir un modèle prédictif ou un groupe de modèles prédictifs par régime de l'actif ou du processus industriel ; une agrégation du modèle prédictif ou du groupe de modèles prédictifs pour prédire une prédiction des données générées par l'actif ou le processus industriel ; une mise en oeuvre d'un méta-modèle spécialisé pour attribuer en continu à des pas de temps déterminés, un poids à chaque modèle prédictif de façon à maximiser un pouvoir prédictif de l'ensemble, et vérifier séquentiellement le pouvoir prédictif, en mesurant à chaque pas de temps, pour les données générées par l'actif ou le processus industriel, un écart entre données prédites par l'agrégation de modèles et données constatées dans l'étape d'agrégation ; une mesure du poids de chaque modèle prédictif dans l'agrégation, afin de déterminer un modèle prédictif dominant ayant le plus grand poids parmi tous les poids mesurés au sein de l'agrégation; une constatation d'un processus de changement de régime de l'actif ou du processus lorsqu'un autre modèle prédictif devient dominant au sein de l'agrégation; une actualisation séquentielle de tous les calculs nécessaires dans les étapes qui précèdent; et une prise en compte de la constatation d'un processus de changement issu de la constatation d'un processus de changement.

Dans un mode de réalisation préféré, au moins une caractéristique du méta-modèle est choisie suivant une priorité poursuivie dans une liste comprenant réactivité, fiabilité, tolérance pour les évènements extrêmes.

Dans un autre mode de réalisation préféré, la fondation de modèles prédictifs résulte dans au moins l'un de la liste comprenant un premier modèle prédictif pour une régime normal et un deuxième modèle prédictif pour une régime anormal.

Dans un autre mode de réalisation préféré, la prise en compte comprend au moins l'un de la liste comprenant une alerte de l'opérateur, et un ralentissement ou une interruption de l'actif ou du processus.

Selon un deuxième aspect, l'invention propose un système de détection de changement de régime d'actifs ou de processus industriel connectés. Le système comprend une base données configurée pour contenir des données générées à l'exploitation de l'actif ou du processus industriel ; au moins un capteur configuré pour mesurer les données générées à l'exploitation de l'actif ou du processus industriel et fournir celles-ci à la base de données ; et un serveur comprenant du code qui est configuré pour implémenter des étapes du procédé selon l'invention sur la base notamment des données mises à disposition par la base de données, à savoir : un renseignement d'équations différentielles décrivant différents régimes de l'actif ou du processus industriel ; une application de modèles d'apprentissage machine aux données de la base de données, pour calibrer les équations différentielles ; une fondation d'au moins un modèle prédictif sur les équations différentielles , pour obtenir un modèle prédictif ou un groupe de modèles prédictifs par régime de l'actif ou du processus industriel; une agrégation du modèle prédictif ou du groupe de modèles prédictifs pour prédire une prédiction des données générées par l'actif ou le processus industriel ; une mise en oeuvre d'un méta-modèle spécialisé pour attribuer en continu à des pas de temps déterminés, un poids à chaque modèle prédictif de façon à maximiser un pouvoir prédictif de l'ensemble, et vérifier séquentiellement le pouvoir prédictif, en mesurant à chaque pas de temps, pour les données générées par l'actif ou le processus industriel, un écart entre données prédites par l'agrégation de modèles et données constatées dans l'étape d'agrégation ; une mesure du poids de chaque modèle prédictif dans l'agrégation, afin de déterminer un modèle prédictif dominant ayant le plus grand poids parmi tous les poids mesurés au sein de l'agrégation ; une constatation d'un processus de changement de régime de l'actif ou du processus industriel lorsque le modèle prédictif devient dominant au sein de l'agrégation ; et une actualisation séquentielle de tous les calculs nécessaires dans les étapes qui précèdent. Le système de détection de changement comprend en outre un dispositif de prise en compte de la constatation d'un processus de changement issu de la constatation d'un processus de changement provenant du serveur.

## Brève description des dessins

L'invention sera mieux comprise au travers de la description détaillée de modes de réalisations préférés de l'invention dans le chapitre suivant, et en références aux dessins dans lesquels

Figure 1 contient un organigramme illustrant un procédé de détection de changement de régime d'actifs ou de processus industriels connectés selon un mode de réalisation préféré de l'invention ; et
Figure 2 illustre un système de détection de changement de régime d'actifs ou de processus industriel connectés selon un mode de réalisation préféré de l'invention.

Il sera fait usage de références numérales pour désigner des objets dans les figures. Une même référence numérale peut être utilisée pour désigner un objet identique ou similaire d'une figure à l'autre.

### Description détaillée de modes de réalisations préférés de l'invention

*Définition*

Dépendance au temps : on nomme « dépendant au temps » un processus dont la dimension temporelle est une dimension essentielle. Par exemple, la dégradation d'un matériau, une émission de chaleur, une pression artérielle... On ne peut comprendre un processus dépendant au temps sans comprendre son évolution au cours du temps.

*Postulat*

Comprendre un processus dépendant au temps, c'est prévoir ce processus : dans un cadre temporel, compréhension et prédiction sont équivalents. Par exemple, dans un cadre temporel, une anomalie est un écart par rapport à une tendance, et une nouvelle anomalie est un écart par rapport à la tendance qu'on avait anticipé.

Une précision de prédiction de 67% signifie ainsi que 67% du phénomène est compris, et que 33% (= 100% - 67%) ne l'est pas (« bruit » ou « anomalie »).

*Exemple de procédé de détection de changement de régime d'actifs ou de processus industriel connectés*

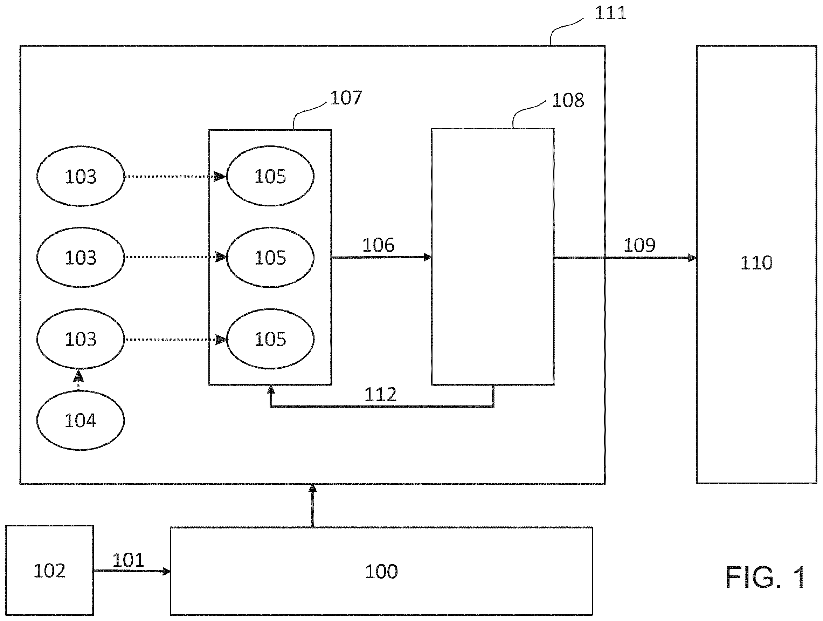

Un exemple de procédé de détection de changement de régime d'actifs ou de processus industriels connectés selon un mode de réalisation préféré de l'invention est implémenté par les étapes décrites dans ce qui suit et en référence à la **Figure 1** :

### Étape 100

Mise à disposition d'une base de données **100** contenant des données **101** générées à l'exploitation de l'actif ou du processus industriel **102.**

### Étape 103

Renseigner des équations différentielles **103** décrivant différents régimes de l'actif ou du processus industriel **102.**

### Étape 104

Appliquer des modèles de machine learning **104** (apprentissage machine) aux données de la base de données **100** générées par l'actif ou le processus industriel **102** pour calibrer les équations différentielles **103** décrivant ses régimes.

### Étape 105

Fonder au moins un modèle prédictif **105** sur les équations différentielles **103,** donc obtenir un modèle prédictif (ou un groupe de modèles prédictifs) par régime de l'actif ou du processus industriel **102.**

Par exemple : un premier modèle prédictif pour un régime normal et un deuxième modèle prédictif pour un régime « surchauffe ».

### Étape 106

Agréger **106** le modèle prédictif ou le groupe de modèles prédictifs fondés dans l'étape **105,** c'est-à-dire tous les utiliser en même temps, pour prédire une prédiction **d**es données générées par l'actif ou le processus industriel **102** (données générées non représentées dans la Figure 1).

### Étape 107

Mise en oeuvre d'un méta-modèle **107** spécialisé pour attribuer en continu à des pas de temps déterminés, un poids (non illustré dans la **Figure 1)** à chaque modèle prédictif fondé dans l'étape **105** de façon à maximiser le pouvoir prédictif de l'ensemble. Le méta-modèle **107** peut être choisi suivant les priorités poursuivies : réactivité, fiabilité, tolérance pour les évènements extrêmes... La mise en oeuvre du méta-modèle **107** spécialisé comprend en outre une vérification séquentielle du pouvoir prédictif, c'est à dire à chaque pas de temps, vérification qui se fait en mesurant, pour les données générées par l'actif ou le processus industriel **102,** l'écart entre données prédites par l'agrégation de modèles et données constatées dans l'étape **106.**

**Étape 108**

Mesurer le poids **108** de chaque modèle prédictif fondé dans l'étape **105** dans l'agrégation. Cela revient alors, par construction, à mesurer la part de chaque régime dans le fonctionnement de l'actif ou du processus industriel **102**. Le régime dominant correspond au modèle prédictif fondé dominant, donc ayant le plus grand poids parmi tous les poids mesurés, au sein de l'agrégation.

**Étape 109**

Constater un changement **109** de régime de l'actif ou du processus industriel **102** lorsqu'un autre modèle prédictif devient dominant au sein de l'agrégation.

Quand la précision de l'agrégation elle-même chute, c'est qu'un régime inconnu domine, donc qu'une anomalie est en train de se produire.

**Étape 112**

Actualiser séquentiellement **112** tous les calculs nécessaires.

**Étape 110**

Au moyen d'un système de gestion, une prise en compte **110** de la constatation du changement de régime issue de l'étape **109**. La prise en compte peut par exemple comprendre une alerte de l'opérateur, un ralentissement de l'actif ou du processus...

Les étapes **100, 103, 104, 105, 106, 107, 108, 109** et **112** peuvent être regroupées dans un groupe d'orchestration **111** automatisant les manipulations de données, les calculs et la présentation des résultats (pre-processing, backtests, post-processing) correspondant.

*Exemple de système de détection de changement de régime d'actifs ou de processus industriel connectés*

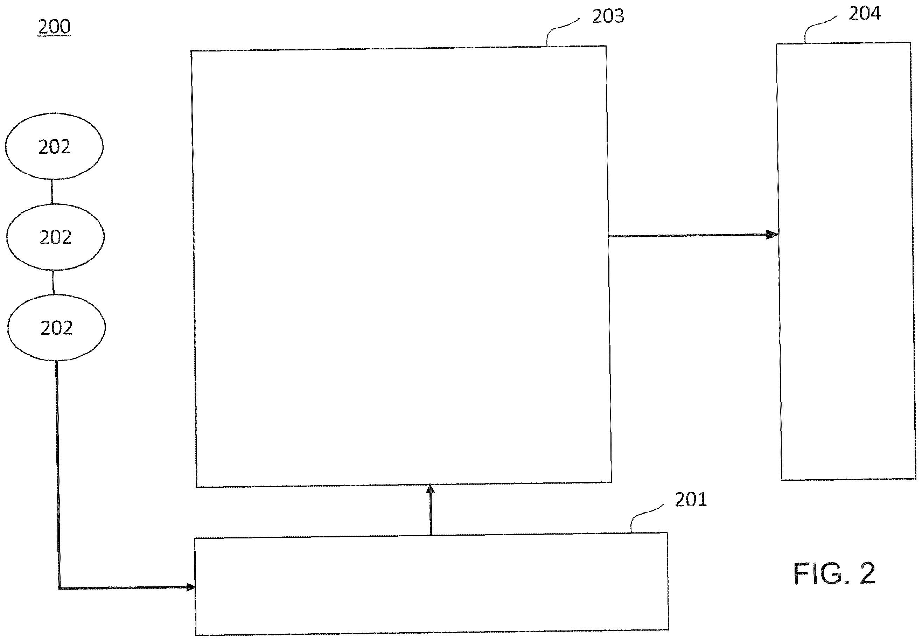

La Figure 2 illustre un système de détection de changement **200** selon un mode de réalisation préféré de l'invention, configuré pour mettre en oeuvre le procédé de l'invention.

Le système de détection de changement **200** comprend une base de données **201** configurée pour contenir des données générées à l'exploitation de l'actif ou du processus industriel. Un ou plusieurs capteurs **202** sont configurés pour mesurer les données générées à l'exploitation de l'actif ou du processus industriel et fournir celles-ci à la base de données **201**. Cette dernière met à disposition les données à un serveur **203** comprenant du code qui est configuré pour implémenter des étapes du procédé selon l'invention :

- un renseignement d'équations différentielles décrivant différents régimes de l'actif ou du processus industriel;
- une application de modèles d'apprentissage machine aux données de la base de données, pour calibrer les équations différentielles;
- une fondation d'au moins un modèle prédictif sur les équations différentielles , pour obtenir un modèle prédictif ou un groupe de modèles prédictifs par régime de l'actif ou du processus industriel;
- une agrégation du modèle prédictif ou du groupe de modèles prédictifs pour prédire les données générées par l'actif ou le processus industriel;
- une mise en oeuvre d'un méta-modèle spécialisé pour attribuer en continu à des pas de temps déterminés, un poids à chaque modèle prédictif de façon à maximiser un pouvoir prédictif de l'ensemble, et vérifier séquentiellement le pouvoir prédictif, en mesurant à chaque pas de temps, pour les données générées par l'actif ou le processus industriel, un écart entre données prédites par l'agrégation de modèles et données constatées dans l'étape d'agrégation;
- une mesure du poids de chaque modèle prédictif dans l'agrégation, afin de déterminer un modèle prédictif dominant ayant le plus grand poids parmi tous les poids mesurés au sein de l'agrégation;
- une constatation d'un processus de changement de régime de l'actif ou du processus industriel lorsqu'un autre modèle prédictif devient dominant au sein de l'agrégation;

- une actualisation séquentielle de tous les calculs nécessaires dans les étapes qui précèdent.

Le système de détection de changement **200** comprend en outre un dispositif de prise en compte de la constatation d'un processus de changement **204** issu de la constatation d'un processus de changement provenant du serveur **203.**

*Autre exemple : avion commercial - tests au sol et capteurs en vol*

Intégration de notre méthode à la plateforme de détection d'anomalies d'un géant de l'aéronautique.

Détection d'anomalies dans le fonctionnement des réacteurs d'un des avions commerciaux du client.

Données résultant de tests au sol et de capteurs en vol, pour 90 paramètres décrivant le fonctionnement des réacteurs.

Pas de définition a priori des anomalies (« apprentissage non supervisé »).

Performance de Datapred supérieure de 50% à la seconde méthode la plus efficace.

*Autre exemple : usine sidérurgique - Émissions de poussières*

Utilisation du procédé selon l'invention pour détecter les émissions de poussières anormales dans une usine sidérurgique, et identifier leurs causes possibles.

Données entrantes générées toutes les 30 secondes par 2'300 capteurs répartis dans 11 groupes fonctionnels.

Taux de vrais positifs de 68-71%.

Actualisation toutes les 15 minutes d'une liste de facteurs de risques pour le processus en question.

*Avantages*

Un aspect original, efficace et/ou techniquement difficile du procédé selon l'invention est qu'il permet d'aborder le sujet de la détection d'anomalie/de changement de régime depuis le postulat raisonnable et efficace que pour les processus dépendants au temps, prédire c'est comprendre ;

En outre, le procédé selon l'invention combine avantageusement les étapes suivantes produisant une synergie nouvelle :

- L'établissement des modèles prédictifs à partir des équations différentielles décrivant les différents états de l'actif ou du processus ;

- L'agrégation séquentielle de ces modèles prédictifs, c'est-à-dire tous les appliquer en même temps et en continu (et non pas périodiquement) aux données générées par l'actif ou le processus ;

- Utiliser la contribution de chaque modèle prédictif à l'efficacité prédictive de l'ensemble pour reconnaître le régime de l'actif ou du processus.

- Utiliser l'efficacité prédictive de l'ensemble suivant différents critères (erreurs de régression, courbe ROC) [thèmes pour revendications dépendantes] pour reconnaître les anomalies ;

- Utiliser la contribution de chaque flux de données entrantes, c'est à dire des mesures de données d'exploitation provenant de l'actif ou du processus industriel, à l'efficacité prédictive de l'ensemble pour identifier les causes possibles des anomalies ;

- Les prévisions résultant d'un processus d'apprentissage et de test dynamique (mesures séquentielles d'écart entre valeurs prédites et constatées), utiliser l'efficacité prédictive de l'ensemble pour reconnaître les anomalies permet de se détacher de seuils fixes, donc de minimiser les faux positifs sans devoir recourir à des recalibrages manuels fréquents ; et

- Le tout reposant sur une gestion sophistiquée du facteur temps : fréquence de réapprentissage des modèles, longueur des périodes d'apprentissage et de test, arbitrage entre vitesse et performance des calculs...

*Cadre de l'invention*

L'approche de détection des changements de régime et de détection d'anomalie de l'invention a été développée dans le cadre mathématique de la "prédiction avec avis d'experts", également connue sous le nom d'agrégation séquentielle d'experts ou de prédicteurs. Ce cadre trouve lui-même sa source dans celui, plus vaste, de l'apprentissage séquentiel.

Notons que si l'apprentissage séquentiel et la prévision de suites individuelles découlent des résultats fondateurs obtenus en 1956-57 en théorie des jeux et énoncés dans [1, 2], on pourra se reporter à [3] comme ouvrage moderne de référence.

Dans le cadre de l'apprentissage séquentiel, on considère une suite d'observations $y_1, y_2, \ldots$ , issues d'un ensemble Y quelconque, et que l'on cherche à prévoir élément par élément (autrement dit séquentiellement).

Le but est ainsi de construire une prévision $\hat{y}_t$ à partir des observations passées $y_1, \ldots, y_{t-1}$. On compare ensuite cette prévision $\hat{y}_t$ à l'observation $y_t$ en utilisant une fonction de perte $l(\hat{y}_t, y_t)$, généralement positive. On veut naturellement que cette prévision soit la précise possible, de façon à ce que la perte cumulée

$$R_T = \sum_{t=1}^{T} l(\hat{y}_t, y_t)$$

soit minimisée.

Comme souligné dans [4], on ne suppose pas que les $y_t$ sont la réalisation d'un processus stochastique sous-jacent dont il s'agirait d'estimer les caractéristiques afin d'en déduire de bonnes prévisions. Dans le cadre de l'agrégation séquentielle, on suppose par contre avoir accès à un ensemble de N prédictions élémentaires $f_{j,t}$ et on suppose également que la prévision $\hat{y}_t$ est obtenue par agrégation convexe de ces prédictions :

$$\hat{y}_t = \sum_{j=1}^{N} p_{j,t}\, f_{j,t}$$

où les poids $p_{j,t}$ (positifs et se sommant à 1) doivent être déterminés judicieusement, par exemple en fonction des performances passées de chaque prédicteur fondamental $j \in \{1, \ldots, N\}$. Ces poids sont typiquement calculés par des algorithmes d'agrégation.

Les algorithmes d'agrégation sont capables de contrôler une quantité appelée le regret, la différence entre la perte cumulée obtenue par les prévisions effectuées et la perte encourue par (par exemple) la meilleure combinaison convexe constante des prévisions fondamentales

$$R_T = \sum_{t=1}^{T} l(\hat{y}_t, y_t) - \inf_p \sum_{t=1}^{T} l\left( \sum_{j=1}^{N} p_{j,t}\, f_{j,t}\, , y_t \right).$$

Ce regret peut être contrôlé uniformément sur toutes les suites d'observations et de prévisions fondamentales. Il est à interpréter comme une erreur d'estimation séquentielle. L'erreur cumulée de la meilleure combinaison convexe constante est à voir comme une erreur d'approximation. Ainsi, la perte cumulée du prévisionniste peut se décomposer ainsi :

$$\sum_{t=1}^{T} l(\hat{y}_t, y_t) = R_T + \inf_p \sum_{t=1}^{T} l\left( \sum_{j=1}^{N} p_{j,t}\, f_{j,t}\, , y_t \right).$$

c'est-à-dire comme une erreur d'approximation ajoutée à une erreur d'estimation séquentielle. Cette décomposition est à rapprocher de la traditionnelle décomposition biais-variance. Pour obtenir de bonnes performances en prévision, il faut donc travailler dans deux directions complémentaires :

- Construire un bon ensemble de modèles prédictifs fondamentaux, afin que l'erreur d'approximation soit faible. Nous nous intéressons ici particulièrement aux procédures de construction de modèles de régression linéaire de type Ridge [5], Lasso [6], ElasticNet [7], à même de reproduire fidèlement les équations différentielles (en général linéaires) mentionnées dans les parties précédentes, décrivant les différents états de l'actif ou du processus.

- Agréger soigneusement leurs prévisions, afin que l'erreur d'estimation séquentielle (le regret) soit faible. Il existe différents algorithmes d'agrégation séquentielle. Le mélange par poids exponentiels [8, 9] est de loin le plus connu et le plus simple. Une légère modification de ces poids permet d'inclure un escompte surpondérant les observations les plus récentes, comme indiqué dans [4] et dans le document annexe intitulé « Sequential aggregation of predictors including a discount technique ». Citons également l'algorithme fixed share [10], la régression ridge [11, 12], les algorithmes BOA [13], ML-Poly [14] et ML-Prod [14], ces derniers permettant d'éviter les calibrations manuelles.

*Références bibliographiques*

[1] Approximation to bayes risk in repeated play, by J. Hannan. In M. Dresher, A. Tucker and P. Wolfe, Contributions to the Theory of Games, volume III, pages 97-139. Princeton University Press, 1957.

[2] An analog of the minimax theorem for vector payoffs, by D. Blackwell. Pacific Journal of Mathematics, 6:1-8, 1956.

[3] Prédiction, Learning, and Games, by N. Cesa-Bianchi et G. Lugosi. Cambridge University Press, 2006.

[4] Agrégation séquentielle de prédicteurs : méthodologie générale et applications à la prévision de la qualité de l'air et à celle de la consommation électrique, by G. Stoltz. Journal de la Société Française de Statistique, volume 151, n.2, (66-106), 2010.

[5] Ridge régression: biased estimation for nonorthogonal problems, by A.E. Hoerl and R. Kennard. Technometrics, 12:55-67, 1970.

[6] Regression shrinkage and sélection via the lasso, by R. Tibshirani. Journal of the Royal Statistical Society. Series B (methodological). Wiley. 58(1):267-88, 1996.

[7] Regularization and variable sélection via the elastic net, by H. Zou and T. Hastie. Journal of the Royal Statistical Society. Series B. 67:301-320, 2005.

[8] The weighted majority algorithm, by N. Littlestone et M. Warmuth. Information and Computation, 108:212- 261, 1994.

[9] Aggregating strategies, by V. Vovk. In Proceedings of the Third Annual Workshop on Computational Learning Theory (COLT), pages 372-383, 1990.

[10] Tracking the best expert, by M. Herbster and M. Warmuth. Machine Learning, 32:151-178, 1998.

[11] Relative loss bounds for on-line density estimation with the exponential family of distributions, by K.S. Azoury and M.K. Warmuth. Machine Learning, 43(3):211-246, 2001.

[12] Compétitive on-line statistics, byV. Vovk. International Statistical Review, 69(2):213-248, 2001.

[13] Optimal learning with bernstein online aggregation, by O. Wintenberger. Extended version available at arXiv:1404.1356 [stat.ML], 2014.

[14] Contributions à l'agrégation séquentielle robuste d'experts : travaux sur l'erreur d'approximation et la prévision en loi. Applications à la prévision pour les marchés de l'énergie, by P. Gaillard. Thèse de doctorat, Université Paris-Sud 11, 2015.

**Revendications**

1. Un procédé de détection d'un changement de régime d'un actif ou d'un processus industriel connecté et représenté dans des mesures de données d'exploitation provenant de l'actif ou du processus industriel, le procédé comprenant

   une mise à disposition d'une base de données (100) contenant des données (101) générées à partir des mesures de données d'exploitation provenant de l'actif ou du processus industriel (102);

un renseignement d'équations différentielles (103) décrivant différents régimes de l'actif ou du processus industriel (102);

une application de modèles d'apprentissage machine (104) aux données de la base de données générées par l'actif ou le processus industriel, pour calibrer les équations différentielles;

une fondation d'au moins un modèle prédictif (105) sur les équations différentielles (103), pour obtenir un modèle prédictif ou un groupe de modèles prédictifs par régime de l'actif ou du processus industriel (102);

une agrégation (106) du modèle prédictif ou du groupe de modèles prédictifs pour prédire une prédiction des données générées par l'actif ou le processus industriel (102);

une mise en oeuvre d'un méta-modèle (107) spécialisé pour attribuer en continu à des pas de temps déterminés, un poids à chaque modèle prédictif de façon à maximiser un pouvoir prédictif de l'ensemble, et vérifier séquentiellement le pouvoir prédictif, en mesurant à chaque pas de temps, pour les données générées par l'actif ou le processus industriel (102), un écart entre données prédites par l'agrégation de modèles et données constatées dans l'étape d'agrégation (106);

une mesure du poids (108) de chaque modèle prédictif dans l'agrégation, afin de déterminer un modèle prédictif dominant ayant le plus grand poids parmi tous les poids mesurés au sein de l'agrégation;

une constatation d'un processus de changement (109) de régime de l'actif ou du processus industriel (102) lorsqu'un autre modèle prédictif (105) devient dominant au sein de l'agrégation;

une actualisation séquentielle (112) de tous les calculs nécessaires dans les étapes qui précèdent; et

une prise en compte (110) de la constatation d'un processus de changement issu de la constatation d'un processus de changement (109).

2. Le procédé de détection d'un changement de régime d'un actif ou d'un processus industriel connecté de la revendication 1, dans lequel au moins une caractéristique du méta-modèle (107) est choisie suivant une priorité poursuivie dans une liste comprenant réactivité, fiabilité, tolérance pour les évènements extrêmes.

3. Le procédé de détection d'un changement de régime d'un actif ou d'un processus industriel connecté de la revendication 1, dans lequel la fondation de modèle prédictif (105) résulte dans au moins l'un de la liste comprenant un premier modèle prédictif pour une régime normal et un deuxième modèle prédictif pour une régime surchauffe.

4. Le procédé de détection d'un changement de régime d'un actif ou d'un processus industriel connecté de la revendication 1, dans lequel la prise en compte comprend au moins l'un de la liste comprenant une alerte de l'opérateur, et un ralentissement de l'actif ou du processus.

5. Un système de détection de changement (200) de régime d'actifs ou de processus industriel connectés, le système comprenant

une base données (201) configurée pour contenir des données générées à l'exploitation de l'actif ou du processus industriel;

au moins un capteur (202) configuré pour mesurer les données générées à l'exploitation de l'actif ou du processus industriel et fournir celles-ci à la base de données (201);

un serveur (203) comprenant du code qui est configuré pour implémenter des étapes du procédé selon l'invention sur la base notamment des données mises à disposition par la base de données (201), à savoir:

un renseignement d'équations différentielles décrivant différents régimes de l'actif ou du processus industriel;

une application de modèles d'apprentissage machine aux données de la base de données, pour calibrer les équations différentielles;

une fondation d'au moins un modèle prédictif sur les équations différentielles , pour obtenir un modèle prédictif ou un groupe de modèles prédictifs par régime de l'actif ou du processus industriel;

une agrégation du modèle prédictif ou du groupe de modèles prédictifs pour prédire une prédiction des données générées par l'actif ou le processus industriel;

une mise en oeuvre d'un meta-modèle spécialisé pour attribuer en continu à des pas de temps déterminés, un poids à chaque modèle prédictif de façon à maximiser un pouvoir prédictif de l'ensemble, et vérifier séquentiellement le pouvoir prédictif, en mesurant à chaque pas de temps, pour les données générées par l'actif ou le processus industriel, un écart entre données prédites par l'agrégation de modèles et données constatées dans l'étape d'agrégation;

une mesure du poids de chaque modèle prédictif dans l'agrégation, afin de déterminer un modèle prédictif dominant ayant le plus grand poids parmi tous les poids mesurés au sein de l'agrégation;
une constatation d'un processus de changement de régime de l'actif ou du processus industriel lorsque le modèle prédictif devient dominant au sein de l'agrégation;
une actualisation séquentielle de tous les calculs nécessaires dans les étapes qui précèdent;

le système de détection de changement comprenant en outre un dispositif de prise en compte de la constatation d'un processus de changement (204) issu de la constatation d'un processus de changement provenant du serveur (203).

FIG. 1

FIG. 2

Europäisches
Patentamt

European
Patent Office

Office européen
des brevets

**RAPPORT DE RECHERCHE EUROPEENNE**

Numéro de la demande

EP 24 15 3436

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2009/300417 A1 (BONISSONE PIERO PATRONE [US] ET AL) 3 décembre 2009 (2009-12-03) * alinéas [0001] - [0003]; revendication 1 * | 1-5 | INV. G05B23/02 G05B17/02 |
| | ----- | | ADD. |
| A | US 2023/195100 A1 (SUBRAMANIAN SIVAKUMAR [IN] ET AL) 22 juin 2023 (2023-06-22) * alinéas [0042], [0048] * | 1-5 | G05B13/04 |
| | ----- | | |
| A | US 2022/107630 A1 (ZOPE KALYANI [IN] ET AL) 7 avril 2022 (2022-04-07) * alinéas [0002] - [0008]; revendications 1-9 * | 1-5 | |
| | ----- | | |

**DOMAINES TECHNIQUES RECHERCHES (IPC)**

G05B
G06N

Le présent rapport a été établi pour toutes les revendications

| Lieu de la recherche | Date d'achèvement de la recherche | Examinateur |
|---|---|---|
| Munich | 10 juillet 2024 | Juillot, Olivier J. |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
..............................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 24 15 3436

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-07-2024

| Document brevet cité au rapport de recherche | Date de publication | Membre(s) de la famille de brevet(s) | Date de publication |
|---|---|---|---|
| US 2009300417 A1 | 03-12-2009 | CH 698898 A2 | 30-11-2009 |
| | | CN 101776862 A | 14-07-2010 |
| | | DE 102009025855 A1 | 03-12-2009 |
| | | JP 5306902 B2 | 02-10-2013 |
| | | JP 2009289262 A | 10-12-2009 |
| | | US 2009300417 A1 | 03-12-2009 |
| US 2023195100 A1 | 22-06-2023 | AU 2021275732 A1 | 05-01-2023 |
| | | BR 112022023623 A2 | 07-02-2023 |
| | | CA 3184445 A1 | 25-11-2021 |
| | | EP 4154105 A1 | 29-03-2023 |
| | | JP 2023527187 A | 27-06-2023 |
| | | US 2023195100 A1 | 22-06-2023 |
| | | WO 2021234732 A1 | 25-11-2021 |
| US 2022107630 A1 | 07-04-2022 | EP 3982225 A2 | 13-04-2022 |
| | | JP 2022061975 A | 19-04-2022 |
| | | US 2022107630 A1 | 07-04-2022 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Approximation to bayes risk in repeated play. **J. HANNAN.** ; **M. DRESHER** ; **A. TUCKER** ; **P. WOLFE**. Contributions to the Theory of Games. Princeton University Press, 1957, vol. III, 97-139
- **D. BLACKWELL**. An analog of the minimax theorem for vector payoffs. *Pacific Journal of Mathematics*, 1956, vol. 6, 1-8
- **N. CESA-BIANCHI** ; **G. LUGOSI.** Prédiction, Learning, and Games. Cambridge University Press, 2006
- **G. STOLTZ.** Agrégation séquentielle de prédicteurs : méthodologie générale et applications à la prévision de la qualité de l'air et à celle de la consommation électrique. *Journal de la Société Française de Statistique*, 2010, vol. 151 (2), 66-106
- **A.E. HOERL** ; **R. KENNARD.** Ridge régression: biased estimation for nonorthogonal problems. *Technometrics*, 1970, vol. 12, 55-67
- Regression shrinkage and sélection via the lasso. **R. TIBSHIRANI.** Journal of the Royal Statistical Society. Series B (methodological).. Wiley, 1996, vol. 58, 267-88
- **H. ZOU** ; **T. HASTIE.** Regularization and variable sélection via the elastic net. *Journal of the Royal Statistical Society.*, 2005, vol. 67, 301-320

- **N. LITTLESTONE** ; **M. WARMUTH**. The weighted majority algorithm. *Information and Computation*, 1994, vol. 108, 212-261
- **V. VOVK.** Aggregating strategies. *Proceedings of the Third Annual Workshop on Computational Learning Theory (COLT)*, 1990, 372-383
- **M. HERBSTER** ; **M. WARMUTH.** Tracking the best expert. *Machine Learning*, 1998, vol. 32, 151-178
- **K.S. AZOURY** ; **M.K. WARMUTH.** Relative loss bounds for on-line density estimation with the exponential family of distributions. *Machine Learning*, 2001, vol. 43 (3), 211-246
- **V. VOVK.** Compétitive on-line statistics. *International Statistical Review*, 2001, vol. 69 (2), 213-248
- **O. WINTENBERGER.** Optimal learning with bernstein online aggregation. *Extended version available at arXiv:1404.1356 [stat.ML*, 2014
- **P. GAILLARD.** Contributions à l'agrégation séquentielle robuste d'experts : travaux sur l'erreur d'approximation et la prévision en loi.. *Applications à la prévision pour les marchés de l'énergie*, 2015